# DEMANDE DE BREVET EUROPEEN

(11) **EP 3 882 412 A1**
(43) Date de publication de la demande: **22.09.2021**
(21) Numéro de dépôt: 21163532.1
(22) Date de dépôt: 18.03.2021
(51) Int. Cl.: E04C 2/38, E04B 1/14, E04B 2/76, E04C 2/24, E04B 1/74, E04B 2/74

(54) **MODULE DE CONSTRUCTION À OSSATURE MÉTALLIQUE ET ISOLATION BIOSOURCÉE**

(30) Priorité: 18.03.2020 FR 2002666
(71) Demandeur: Arika, Lotfi, 33600 Pessac (FR)
(72) Inventeur: Arika, Lotfi, 33600 Pessac (FR)
(74) Mandataire: Ipside

(57) **Abrégé**

L'invention se rapporte à un module (100) de construction écoresponsable et durable comportant une ossature métallique (10), une couche d'isolation intérieure (20) enveloppant l'ossature et constituée d'un premier matériau biosourcé tel qu'une ouate de cellulose, et une couche d'isolation extérieure (30) différente de la couche d'isolation intérieure et constituée d'un deuxième matériau biosourcé thermiquement isolant.

L'invention concerne également un système constructif modulaire comprenant un tel module.

## Description

### DOMAINE TECHNIQUE

La présente invention appartient au domaine de la construction de bâtiments, notamment de la construction écoresponsable et durable, et concerne plus particulièrement un module structural à ossature métallique comprenant des couches à base de matériaux biosourcés, tels que la ouate de cellulose, et un système constructif modulaire destiné à la construction de maisons individuelles par exemple.

### ÉTAT DE L'ART

La construction de bâtiments, ou plus spécifiquement de maisons, à ossature métallique nécessite l'utilisation de panneaux comprenant généralement deux plaques écartées, une plaque intérieure et une plaque extérieure, placées en vis-à-vis. Ces plaques, souvent en bois, sont fixées à une ossature métallique formée de montants reliés par des traverses ou lisses d'extrémité. L'assemblage ainsi réalisé détermine un volume entre les plaques destiné à être rempli d'un matériau isolant thermiquement et/ou acoustiquement.

Il existe de nombreux procédés de construction de bâtiment qui visent notamment à améliorer l'isolation thermique. Pour ce faire, on utilise essentiellement des panneaux en matière à faible coefficient de transfert thermique, telle que du polystyrène expansé.

Ces panneaux isolants sont utilisés dans des procédés qui consistent, de manière générale, en une réalisation in situ des murs par des montages conventionnels de montants, de traverses, de plaques, etc.

Par exemple, une structure porteuse dont les montants sont espacés permet de mettre en œuvre un isolant en monocouche calé dans l'ossature selon les étapes suivantes : mettre en place l'isolant entre les montants ; agrafer une membrane d'étanchéité à l'air sur les montants ; réaliser des joints entre les lés de membrane avec un adhésif puis assurer l'étanchéité à l'air en périphérie à l'aide d'un mastic ; utiliser des tasseaux bois ou des profilés pour créer un espace technique de passage de gaines ; passer les gaines dans l'espace technique ; fixer des plaques de plâtre sur les tasseaux ou les profilés.

Ce mode de construction implique un travail long et laborieux du fait du nombre important d'opérations à réaliser et d'outils nécessaires. Par ailleurs, la construction de murs tels que définis supra nécessite l'emploi d'une main d'œuvre spécialisée dans l'exécution des différentes tâches favorisant ainsi l'augmentation du coût final du mur.

D'autres solutions proposant des modules prêts à monter existent pour faciliter l'opération de construction. Le document FR2600099 décrit par exemple un module constitué d'une structure en bois comprenant deux montants entretoisés horizontalement, d'un panneau d'habillage en bois fixé à la structure, d'une isolation positionnée dans la structure, d'une enveloppe de maintien en position de l'isolation, et éventuellement d'une protection dudit module.

Cette solution reprend globalement la même architecture complexe que les panneaux réalisés in situ par le procédé précité et ne permet donc pas de disposer d'un module simple à la fois isolant et porteur.

Le document FR3009319 décrit quant à lui un module plus simple qui se présente sous forme d'une structure « sandwich » avec deux plaques en vis-à-vis entre lesquelles est placé un isolant.

Le document US6729094 décrit un panneau préfabriqué comportant une ossature métallique enveloppée d'une couche isolante intérieure qui peut être en cellulose, mais comportant également une couche isolante extérieure qui n'est absolument pas constituée d'un matériau biosourcé. Au contraire, cette couche isolante extérieure peut être constituée de matériaux polymères, tels que du polystyrène, du polyuréthane, de matériaux en caoutchouc recyclé tels que des pneus ébréchés ou broyés, et des composites. Plus préférablement, des mousses polymères rigides, telles que la mousse de polystyrène ou de polyuréthane, sont utilisées. Cette couche d'isolation extérieure est donc source de pollution environnementale.

Il n'existe, à la connaissance du demandeur, aucune solution de module structural de construction à ossature métallique comprenant des couches d'isolation en matériaux biosourcés, favorisant le recyclage et limitant les déchets résiduels et l'empoussièrement du site de construction.

### PRÉSENTATION DE L'INVENTION

Le problème principal auquel la présente invention apporte une solution est de disposer de modules de construction comprenant une ou plusieurs couches d'isolation à base de matériaux biosourcés, et assurant, d'une part, une résistance mécanique suffisante pour former des éléments de construction porteurs et, d'autre part, une modularité facilitant leur assemblage en vue de réaliser lesdits éléments de construction.

Un autre objectif de la présente invention est d'obtenir un module de construction biosourcé 100% recyclable, dont la mise en place s'accompagne d'une très faible émission de poussière, utilise la filière sèche et ne nécessite donc aucune consommation d'eau, et réduit considérablement les déchets sur le site de construction.

À cet effet, la présente invention a pour objet un module de construction comportant une ossature métallique, une couche d'isolation intérieure enveloppant l'ossature et constituée d'un premier matériau biosourcé, et une couche d'isolation extérieure différente de la couche d'isolation intérieure. Ce module est remarquable en ce que la couche d'isolation extérieure est constituée d'un deuxième matériau biosourcé.

Ainsi, le module de construction est majoritairement constitué de matériaux biosourcés et s'inscrit parfaitement dans le cadre de la construction écoresponsable.

Avantageusement, le premier matériau biosourcé est une ouate de cellulose, matériau réputé pour son inertie thermique, idéale aux changements de saisons, et ses propriétés ignifugeantes.

Selon un mode de réalisation avantageux, le deuxième matériau biosourcé est thermiquement isolant.

Selon un mode de réalisation, un frein vapeur hygro-variable est appliqué à une face interne de la couche d'isolation intérieure et permet une meilleure respiration de l'enveloppe du module de construction.

Selon un mode de réalisation, le module de construction comporte en outre un panneau de lamelles minces, longues et orientées OSB dont au moins une partie est placée entre les couches d'isolation intérieure et extérieure. Toutefois, la présence d'un tel panneau n'est pas obligatoire surtout lorsque l'ossature métallique du module est contreventée.

Plus particulièrement, une autre partie du panneau OSB présente une face externe sur laquelle est posée une couche étanche en biomatériau, de type caoutchouc éthylène-propylène-diène monomère EPDM, et une face interne en vis-à-vis de la couche d'isolation intérieure.

La partie de l'OSB en « sandwich » entre les couches d'isolation intérieure et extérieure correspond à une configuration verticale, par exemple un mur, et la partie de OSB recouverte d'EPDM correspond quant à elle à une configuration horizontale, par exemple un plafond.

De façon avantageuse, le module de construction comporte en outre une plaque de plâtre fixée à la couche d'isolation intérieure au moyen de fourrures adaptées.

Selon l'invention, le module de construction comporte au niveau d'une face externe de la couche d'isolation extérieure un bardage fixé à l'ossature métallique ou un enduit appliqué sur ladite face externe.

Selon un mode de réalisation avantageux, l'ossature métallique du module de construction est contreventée par l'intermédiaire de traverses.

La présente invention a également pour objet un système constructif à ossature métallique comportant au moins deux modules de construction tels que présentés, lesdits modules pouvant être juxtaposés et/ou superposés.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un module de construction biosourcé et d'un système constructif associé conformes aux principes de l'invention.

### BRÈVE DESCRIPTION DES FIGURES

Les différentes figures ne sont pas représentées à l'échelle, et les éléments d'une figure ne sont pas nécessairement à la même échelle. Sur l'ensemble des figures, les éléments identiques ou équivalents portent la même référence numérique.

Il est ainsi illustré en :
- Figure 1 : une vue partielle en coupe d'un module de construction biosourcé selon un mode de réalisation de l'invention, la façade étant recouverte d'un bardage ;
- Figure 2 : une vue partielle en coupe d'un module de construction biosourcé selon un autre mode de réalisation, la façade étant recouverte d'un enduit.

### DESCRIPTION DÉTAILLÉE DE MODES DE RÉALISATION

Dans le mode de réalisation décrit ci après, on fait référence à un module de construction à ossature métallique et matériaux biosourcés, destiné principalement à la construction de murs extérieurs de maisons individuelles. Cet exemple non limitatif est donné pour une meilleure compréhension de l'invention et n'exclut pas l'utilisation du module dans la construction d'autres types de bâtiments tels que les immeubles et les ouvrages d'appoint.

Il convient de noter qu'on entend par matériau « biosourcé » tout matériau provenant de la biomasse (animale ou végétale). Les matériaux biosourcés couvrent une large gamme de produits tels que le bois, la paille, le chanvre, la ouate de cellulose, le textile recyclé, le liège et la laine de mouton. Toutefois, il en existe d'autres, comme le lin, les plumes de canard, le miscanthus, parfois moins développés, qui n'ont pas été utilisés dans la réalisation de la présente invention.

Dans la suite de la description, le terme « module biosourcé » désigne un module de construction comportant au moins une couche de matériau biosourcé.

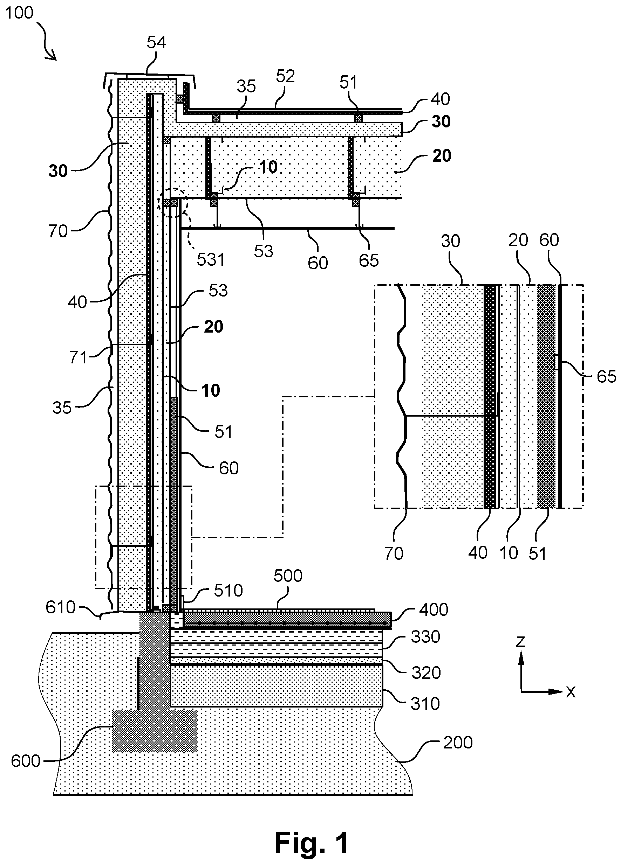

La figure 1 représente un module biosourcé 100 comportant principalement une ossature métallique 10, formée de montants et de traverses, une couche 20 de matériau biosourcé enveloppant des éléments de l'ossature métallique, un isolant extérieur 30 appliqué sur une face de ladite couche, ainsi que d'autres éléments décrits plus loin.

Dans la suite de la description, les termes «avant», «arrière», «haut» et « bas », ainsi que les expressions qui peuvent leur être associées, seront compris, sauf précision ou évidence contraire, comme ayant le sens que leur donnerait un observateur du module représenté à la figure 1. Compte tenu du repère représenté sur cette figure, l'avant et le haut sont respectivement orientés vers les X croissants et les Z croissants.

L'ossature métallique 10, selon l'exemple de réalisation illustré, comporte un assemblage de montants et de traverses qui apporte une majeure partie de la tenue mécanique du module biosourcé 100. Les éléments de l'ossature métalliques 10 peuvent être réalisés dans tout métal ou alliage métallique usuel dans le domaine du bâtiment. Par exemple, l'ossature métallique est réalisée dans un acier haute performance revêtu d'une couche de protection en zinc - aluminium - magnésium, ou dans un acier galvanisé.

En outre, la structure de l'ossature métallique 10 peut présenter différentes géométries selon les applications visées.

La couche 20 de matériau biosourcé, ci-après « couche biosourcée », est à base d'un matériau biosourcé insufflable. De préférence, la couche biosourcée 20 est en ouate de cellulose, matériau réputé pour son inertie thermique et ses propriétés ignifugeantes avantageuses.

En outre, la couche biosourcée 20 est recouverte, au moins sur une face, d'un revêtement étanche 53, de préférence un revêtement hygro-variable tel qu'un frein vapeur laissant respirer l'enveloppe du module biosourcé 100. Le frein vapeur 53 est appliqué sur les faces intérieures de la couche biosourcée 20 au sens du bâtiment, autrement dit sur les faces proches du volume habitable. De plus, le frein vapeur hygro-variable 53 présente au niveau des jonctions, telles qu'une jonction mur - plafond, un recouvrement 531 adapté et suffisant.

Il convient de noter que la présence d'un frein vapeur permet d'éviter un stockage d'humidité et minimise donc le risque d'une détérioration par pourrissement.

La couche biosourcée 20 entoure les différents éléments de l'ossature métallique 10. Ainsi chaque montant et traverse, selon l'exemple de réalisation illustré, est une poutre prismatique de section rectangulaire ou un profilé quelconque présentant une face avant, une face arrière et des faces latérales rectangulaires destinées à être au contact, totalement ou partiellement, de la couche biosourcée 20.

L'isolant extérieur 30 se présente sous forme d'une couche enveloppant quasi intégralement la couche biosourcée 20 de sorte à améliorer les propriétés isolantes, à la fois thermiques et acoustiques, du module 100. L'isolant 30 peut lui-même être à base d'un matériau biosourcé ou de nature quelconque selon les performances recherchées.

Il est important de noter que la couche biosourcée 20 et la couche isolante extérieure 30 peuvent présenter des épaisseurs variables en fonction de leurs positions dans le module 100 ou dans le système constructif selon l'invention (mur, plafond, etc.). Cette différence d'épaisseurs entre lesdites couches est visible sur les figures.

De façon optionnelle, le module biosourcé 100 peut comporter un panneau de lamelles minces, longues et orientées OSB (*Oriented Strand Board*) 40, d'un quelconque type, de préférence de type 3 selon la norme européenne EN 300, autrement dit, un OSB travaillant pour une utilisation en conditions humides.

L'OSB 40, selon l'exemple de réalisation illustré, est positionné entre la couche biosourcée 20 et l'isolant extérieur 30 en configuration verticale (portion mur du module), et au-dessus de l'isolant extérieur 30 en configuration horizontale (portion plafond du module). Dans ce dernier cas, des tasseaux 51 séparent l'OSB 40 de l'isolant 30, définissant par là-même un vide d'air 35 ventilé entre l'OSB et ledit isolant.

La présence de l'OSB est conditionnée par le contreventement ou non de l'ossature métallique 10, de sorte que l'OSB n'est pas nécessaire dans le cas d'une ossature métallique contreventée.

De préférence, l'ossature métallique 10 est contreventée, par l'intermédiaire de traverses métalliques, et la présence de l'OSB n'est pas obligatoire. Cela permet d'avoir une ventilation maîtrisée pour minimiser les risques de condensation et de moisissure.

Outre un module de contreventement, tel que l'OSB, pouvant être agencé sur la face avant de la couche isolante, du côté intérieur du module biosourcé, le module biosourcé comporte au moins une contre-latte fixée à la face arrière de ladite couche isolante, du côté extérieur du module biosourcé, et destinée à recevoir un parement extérieur.

Selon l'exemple de réalisation de la figure 1, le parement extérieur est un bardage 70 fixé à l'ossature métallique 10 au moyen de fixations 71 traversant l'OSB 40. Un vide d'air 35 ventilé subsiste entre le bardage 70 et l'isolant extérieur 30.

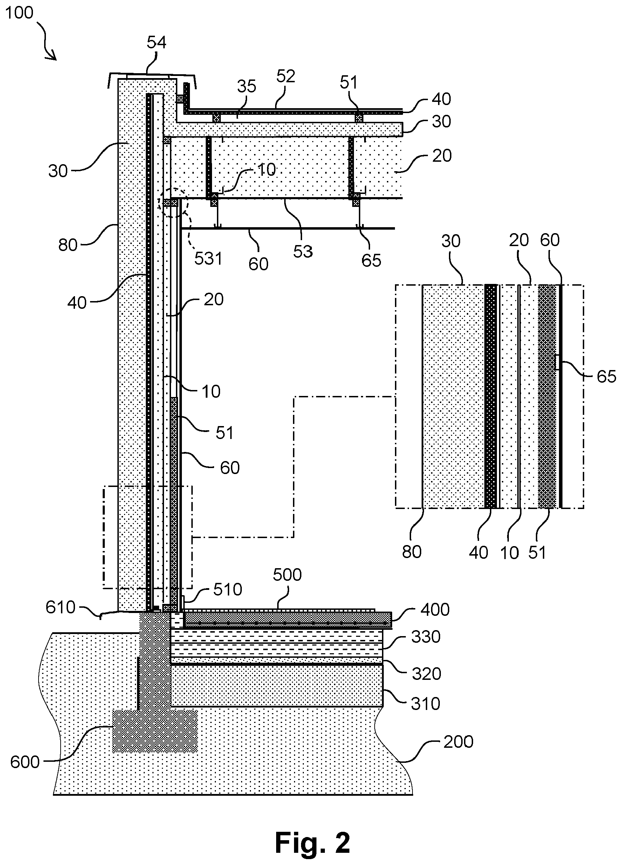

La figure 2 représente un module biosourcé 100 selon un exemple de réalisation alternatif, dans lequel le bardage en façade est remplacé par un enduit 80 adapté, appliqué directement sur la face externe de l'isolant extérieur 30.

Au niveau de son côté intérieur, le module biosourcé 100 comporte en outre une plaque de plâtre 60, de préférence de type BA selon la norme française NF EN 520 (2009), caractérisée par des bords longitudinaux amincis afin de permettre la dissimulation de joints, au moyen d'une bande noyée dans un enduit par exemple. La plaque de plâtre 60 est fixée au reste du module biosourcé, en particulier à la couche biosourcée 20, au moyen de fourrures 65 spécifiques.

Selon les exemples illustrés, la module biosourcé 100 comporte d'autres éléments secondaires comme : une couche de caoutchouc 52 éthylène-propylène-diène monomère (EPDM), qui est un biomatériau, posée sur l'OSB 40 en configuration horizontale ; un résilient entre l'OSB et la couche biosourcée 20 en configuration verticale pour assurer une meilleure isolation phonique par exemple ; une couvertine 54 au niveau d'une partie supérieure du module biosourcé 100 pour apporter plus de protection et d'étanchéité ; et/ou tout autre élément de finition d'usage connu dans le domaine du bâtiment.

Au vu de la description, le module 100 peut se présenter selon d'autres variantes en termes de forme et de dimensions sans sortir du cadre de l'invention.

Les différentes configurations possibles permettent en effet d'obtenir des modules de construction pouvant être agencés suivant des arrangements bien définis, et ainsi former un système constructif simple pour réaliser toute sorte de bâtiment.

Dans l'exemple de réalisation illustré, une majorité d'éléments du module biosourcé présente une forme sensiblement parallélépipédique de sorte que ledit module puisse être juxtaposé et/ou superposé à un autre module de construction qui lui est identique.

Les dimensions du module biosourcé peuvent être quelconques et choisies en fonction des performances thermiques et mécaniques recherchées.

Selon l'invention, le module biosourcé 100 est destiné à être assemblé avec d'autres modules, identiques ou de configurations différentes, pour former les murs d'une maison à ossature métallique par exemple.

Les modules biosourcés 100 peuvent être placés verticalement pour faire un mur par exemple, horizontalement de façon à faire une dalle sur plot ou une dalle portante, ou en position inclinée pour faire une toiture par exemple.

Le module biosourcé 100 peut comporter, dans sa partie inférieure, une traverse inférieure solidaire de son ossature métallique, ladite traverse inférieure permettant par exemple de fixer mécaniquement le module à une lisse basse elle-même solidaire d'une dalle.

Un assemblage de modules biosourcés 100 selon l'invention peut comporter une lisse haute posée sur la partie supérieure dudit assemblage de sorte à former une ceinture qui permettra de poser un autre niveau ou une charpente.

En référence aux figures 1 et 2, le module biosourcé 100 est installé sur une fondation 600, par exemple sur semelle visible sous la bande d'arase 610, dans un sol 200, avec une dalle 400 en béton reposant de bas en haut sur une couche de tout-venant 310, une couche de sable 320 ou d'un autre agrégat de plus faible granulométrie que le tout-venant, et une couche d'isolation 330. Des éléments de finition tels qu'un carrelage 500 et une plinthe 510 peuvent ensuite être posés selon les règles de l'art.

Le module biosourcé ainsi décrit présente plusieurs avantages parmi lesquels une résistance mécanique et un rapport résistance thermique à épaisseur totale améliorés, un gain de surface intérieure en raison de la faible épaisseur du module, une diminution des ponts thermiques grâce à la continuité des couches isolantes, une possibilité d'intégration d'éléments de menuiserie en raison de la présence de montants métalliques dans le module, et un intérêt économique et écologique considérable.

Accessoirement, le module de construction selon l'invention peut comporter toute sorte d'éléments de commodité pour faciliter son intégration dans une construction à ossature métallique selon les règles de l'art, il peut par exemple comporter un chevêtre pour l'intégration de diverses menuiseries, des poteaux d'angles et de reprise de charges, un isolant supplémentaire pour préserver la ouate de cellulose du côté « froid » de la construction, une laine minérale pour un meilleur confort acoustique et un gain thermique du côté « chaud », des tasseaux et des profilés, ainsi que différentes plaques et membranes.

L'utilisation des matériaux biosourcés dans le module permet à celui-ci de bénéficier d'une marge anticipée sur des réglementations environnementales plus restrictives que les normes actuelles.

De plus, l'assemblage des modules pour former des murs ou d'autres éléments de construction s'avère aisé et ne nécessite que des connaissances générales du domaine de la construction à ossature métallique.

## Revendications

1. Module (100) de construction comportant une ossature métallique (10), une couche d'isolation intérieure (20) enveloppant l'ossature et constituée d'un premier matériau provenant de la biomasse, dit biosourcé, et une couche d'isolation extérieure (30) différente de la couche d'isolation intérieure, **caractérisé en ce que** la couche d'isolation extérieure (30) est constituée d'un deuxième matériau biosourcé.

2. Module de construction selon la revendication 1, dans lequel le premier matériau biosourcé est une ouate de cellulose.

3. Module de construction selon la revendication 1 ou 2, dans lequel le deuxième matériau biosourcé est thermiquement isolant.

4. Module de construction selon l'une quelconque des revendications précédentes, dans lequel un frein vapeur (53) hygro-variable est appliqué à une face interne de la couche d'isolation intérieure (20).

5. Module de construction selon l'une quelconque des revendications précédentes, comportant en outre un panneau de lamelles minces, longues et orientées OSB (40) dont au moins une partie est placée entre les couches d'isolation intérieure (20) et extérieure (30).

6. Module de construction selon la revendication 5, dans lequel une autre partie du panneau OSB (40) présente une face externe sur laquelle est posée une couche étanche (52) en biomatériau, de type caoutchouc éthylène-propylène-diène monomère EPDM, et une face interne en vis-à-vis de la couche d'isolation intérieure (20).

7. Module de construction selon l'une quelconque des revendications précédentes, comportant en outre une plaque de plâtre (60) fixée à la couche d'isolation intérieure (20) au moyen de fourrures (65).

8. Module de construction selon l'une quelconque des revendications précédentes, comportant au niveau d'une face externe de la couche d'isolation extérieure (30) un bardage (70) fixé à l'ossature métallique (10) ou un enduit (80) appliqué sur ladite face externe.

9. Module de construction selon l'une quelconque des revendications précédentes, dans lequel l'ossature métallique (10) est contreventée par l'intermédiaire de traverses.

10. Système constructif à ossature métallique, **caractérisé en ce qu'**il comporte au moins deux modules (100) de construction selon l'une des revendications précédentes, lesdits modules étant juxtaposés et/ou superposés.
